# FASCICULE DE BREVET EUROPEEN

(11) **EP 2 200 110 B1**
(45) Date de publication et mention de la délivrance du brevet: **16.04.2014**
(21) Numéro de dépôt: 09178761.4
(22) Date de dépôt: 10.12.2009
(51) Int. Cl.: H01M 2/10

(54) **Système de maintien d'accumulateurs électrochimiques**
Halterungssystem für elektrochemische Akkumulatoren
System for maintaining electrochemical accumulators

(30) Priorité: 16.12.2008 FR 0807051
(43) Date de publication de la demande: 23.06.2010
(73) Titulaire: Saft Groupe S.A., 93170 Bagnolet (FR)
(72) Inventeur: Turbe, Benoît, 33800 Bordeaux (FR); Narbonne, Alexandre, 33000 Bordeaux (FR)
(74) Mandataire: Hirsch & Associés

(56) Documents cités:
- EP-A1- 1 109 237
- EP-A1- 1 953 848
- WO-A1-2008/074034

## Description

La présente invention concerne un système de maintien d'accumulateurs électrochimiques constituant une batterie.

Une batterie comprend généralement une pluralité d'accumulateurs électrochimiques disposés côte à côte. Chaque accumulateur comprend des bornes de sortie électrique, qui sont reliées aux bornes de sortie électrique d'accumulateurs adjacents. Il est nécessaire de maintenir les accumulateurs afin qu'ils ne puissent pas bouger une fois montés dans la batterie.

Plusieurs solutions de maintien mécanique ont été proposées.

Il est connu par le document JP-A-2007 328926 un module de batterie comprenant deux flasques supérieur et inférieur de maintien d'accumulateurs électrochimiques.

Il est connu par le document WO-A-2008/074034 un module de batterie comprenant un plateau supérieur et un plateau inférieur. Le plateau supérieur et le plateau inférieur présentent chacun sur une de leurs faces une pluralité de logements, chaque logement étant configuré pour recevoir un accumulateur. Le plateau inférieur comprend également une chambre configurée pour confiner du gaz qui serait libéré par un ou des accumulateurs en cas de disfonctionnement.

Il est connu par le document EP-A-1 109 237 un module de batterie comprenant deux flasques supérieur et inférieur de maintien d'accumulateurs électrochimiques. Les flasques comprennent sur une de leurs faces une pluralité de cavités adaptées à recevoir les accumulateurs électrochimiques. Le flasque supérieur comprend également sur son autre face des rainures adaptées à recevoir des connexions électriques.

Dans l'ensemble de ces documents, les flasques sont spécifiques à un unique format d'accumulateur. Par exemple, si le diamètre des accumulateurs varie ou si la position des bornes de sortie des accumulateurs varie, le flasque doit être changé. Ces flasques ne sont donc pas modulaires.

EP-A-1 953 848 décrit un module d'accumulateurs de format cylindrique. Chaque accumulateur possède à chacune de ses extrémités une coupelle fixée par un procédé de soudure par résistance. Les accumulateurs sont montés dans le module de manière à ce que les extrémités munies des coupelles passent à travers les ouvertures d'un flasque.

De plus, les flasques doivent présenter une épaisseur limitée au niveau de la zone d'appui sur l'accumulateur afin de ne pas dépasser la hauteur des bornes de sortie électrique des accumulateurs et ainsi ne pas empêcher la connexion entre accumulateurs. Cette limitation de l'épaisseur des flasques nuit à la tenue mécanique du maintien.

Il y a donc un besoin pour un système de maintien d'accumulateurs électrochimiques qui soit modulaire et résistant mécaniquement.

Pour cela, l'invention propose un système de maintien d'accumulateurs électrochimiques, chaque accumulateur présentant un conteneur comprenant un fond et un couvercle muni de bornes de sortie électrique, le système comprenant :
- un premier flasque muni d'ouvertures traversantes ;
- une pluralité de coupelles, chaque coupelle étant adaptée pour être placée sur le couvercle d'un accumulateur électrochimique et pour être reçue dans une des ouvertures traversantes du premier flasque.

Selon les modes de réalisation, le système de maintien d'accumulateurs électrochimiques selon l'invention peut comprendre une ou plusieurs des caractéristiques suivantes :
- chaque coupelle est en matériau isolant électriquement ;
- chaque premier flasque est en matériau conducteur électriquement ;
- chaque coupelle est en matériau conducteur électriquement ;
- chaque premier flasque est en matériau isolant électriquement ;
- chaque coupelle comprend un épaulement servant de butée au premier flasque ;
- chaque coupelle comprend un moins un bossage de retenue du premier flasque ;
- chaque coupelle comprend des découpes sur ses bords ;
- chaque coupelle comprend deux trous de tailles différentes et un marquage de polarité électrique, chacun des trous permettant le passage d'une des bornes de sortie électrique d'un accumulateur ;
- chaque coupelle comprend en outre un ergot de détrompage ;

Le système de maintien d'accumulateurs électrochimiques selon l'invention peut comprendre en outre :
- un deuxième flasque muni d'ouvertures traversantes ;
- une pluralité de bagues, chaque bague étant adaptée à être placée sur le fond d'un accumulateur électrochimique et à être reçue dans une des ouvertures traversantes du deuxième flasque.

Selon les modes de réalisation, le système de maintien d'accumulateurs électrochimiques selon l'invention peut comprendre une ou plusieurs des caractéristiques suivantes :
- chaque bague est en matériau isolant électriquement ;
- chaque deuxième flasque est en matériau conducteur électriquement ;
- chaque bague est en matériau conducteur électriquement ;
- chaque deuxième flasque est en matériau isolant électriquement ;
- chaque bague est munie d'un fond comprenant un opercule sécable ;
- chaque bague comprend un épaulement servant de butée au deuxième flasque ;
- chaque bague comprend un moins un bossage de retenue du deuxième flasque ;

L'invention concerne aussi une batterie comprenant une pluralité d'accumulateurs électrochimiques et un système de maintien selon l'invention.

D'autres caractéristiques et avantages de l'invention apparaîtront à la lecture de la description détaillée qui suit des modes de réalisation de l'invention donnés à titre d'exemple uniquement et en référence aux dessins qui montrent :
- figure 1, une vue en perspective d'un système de maintien monté avec des accumulateurs électrochimiques ;
- figure 2, une vue en perspective d'une coupelle d'un système de maintien d'accumulateurs électrochimiques ;
- figure 3, une vue en coupe de la coupelle de la figure 2 selon C-C ;
- figure 4, une vue en perspective d'une bague d'un système de maintien d'accumulateurs électrochimiques ;
- figure 5, une vue en coupe de la bague de la figure 4 selon D-D ;
- figure 6, une vue de dessus d'un système de maintien monté avec des accumulateurs électrochimiques ;
- figure 7, une vue en coupe du système de maintien de la figure 6 selon A-A ;
- figure 8, une vue en coupe du système de maintien de la figure 6 selon B-B.

Les numéros de référence qui sont identiques sur les différentes figures représentent des éléments identiques ou similaires.

L'invention concerne un système de maintien d'accumulateurs électrochimiques, chaque accumulateur présentant un conteneur présentant un fond et un couvercle muni de bornes de sortie électrique. Le système de maintien comprend un premier flasque muni d'ouvertures traversantes et une pluralité de coupelles. Chaque coupelle est adaptée pour être placée sur le couvercle d'un accumulateur électrochimique et pour être reçue dans une des ouvertures traversantes du premier flasque.

Le système de maintien selon l'invention est modulaire. En effet, les coupelles sont adaptées aux accumulateurs qu'elles doivent recevoir. En revanche, le même premier flasque peut être utilisé avec différentes coupelles. Ainsi, si le diamètre des accumulateurs varie ou si la position des bornes de sortie des accumulateurs varie, seules les coupelles doivent être changées mais pas le flasque. De même, si une coupelle est abîmée, seule la coupelle est à changer et non tout le flasque.

De plus, la zone de maintien mécanique des accumulateurs est déplacée sur le corps du conteneur et libère l'accès aux bornes de sortie électrique. Ainsi, l'épaisseur du flasque peut être aussi important que nécessaire pour assurer une bonne tenue mécanique du système de maintien une fois monté. Le système de maintien selon l'invention est donc plus résistant mécaniquement que les systèmes connus de l'art antérieur.

Le système de maintien comprend en outre un deuxième flasque muni d'ouvertures traversantes et une pluralité de bagues. Chaque bague est adaptée pour être placée sur le fond d'un accumulateur électrochimique et pour être reçue dans une des ouvertures traversantes du deuxième flasque.

Le système de maintien selon l'invention est encore modulaire avec le deuxième flasque et les bagues. En effet, les bagues sont adaptées aux accumulateurs qu'elles doivent recevoir. En revanche, le même deuxième flasque peut être utilisé avec différentes bagues. Ainsi, si le diamètre des accumulateurs varie, seules les bagues doivent être changées mais pas le flasque. De même, si une bague est abîmée, seule la bague est à changer et non tout le flasque.

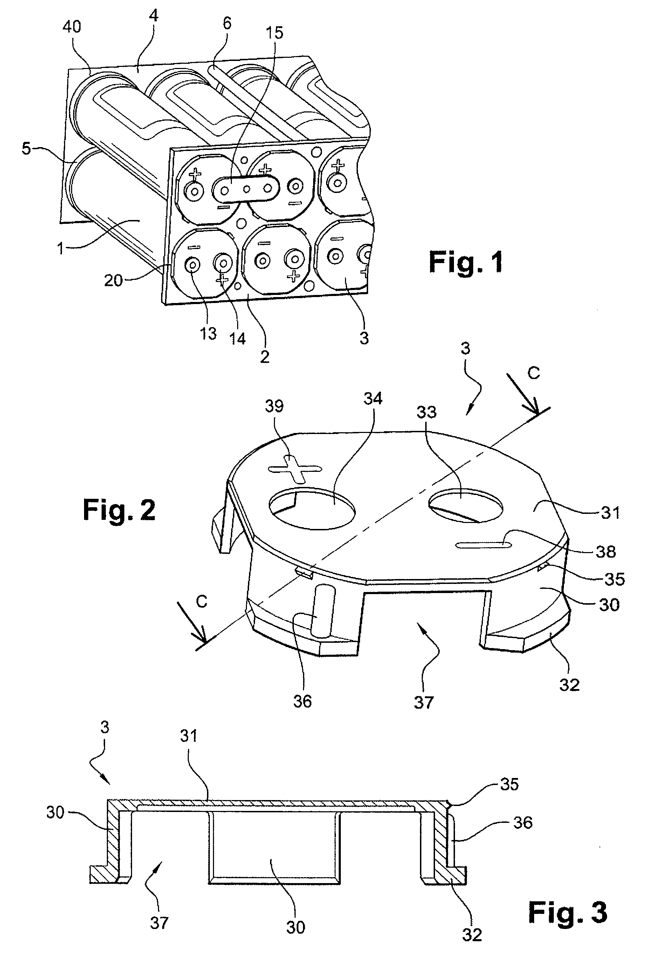

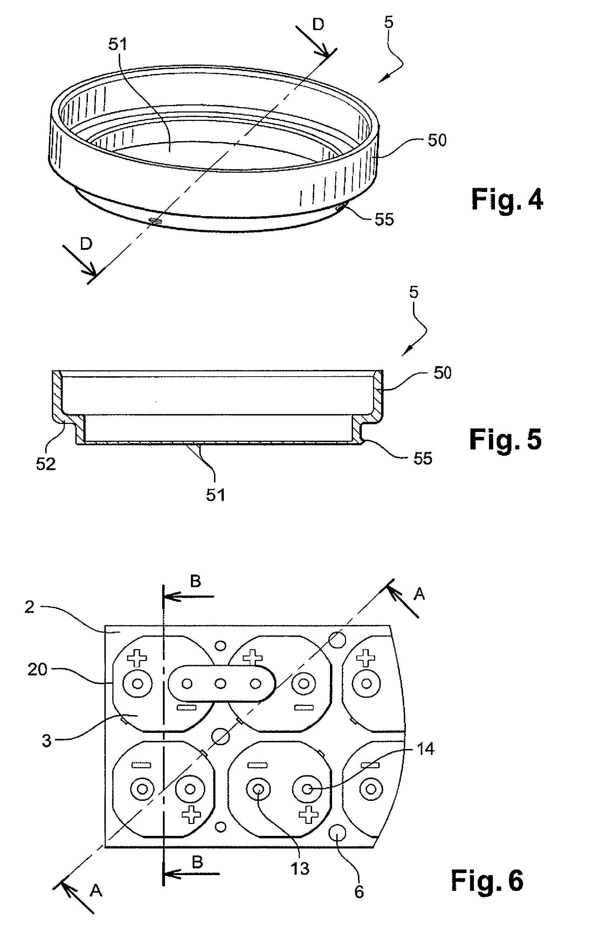

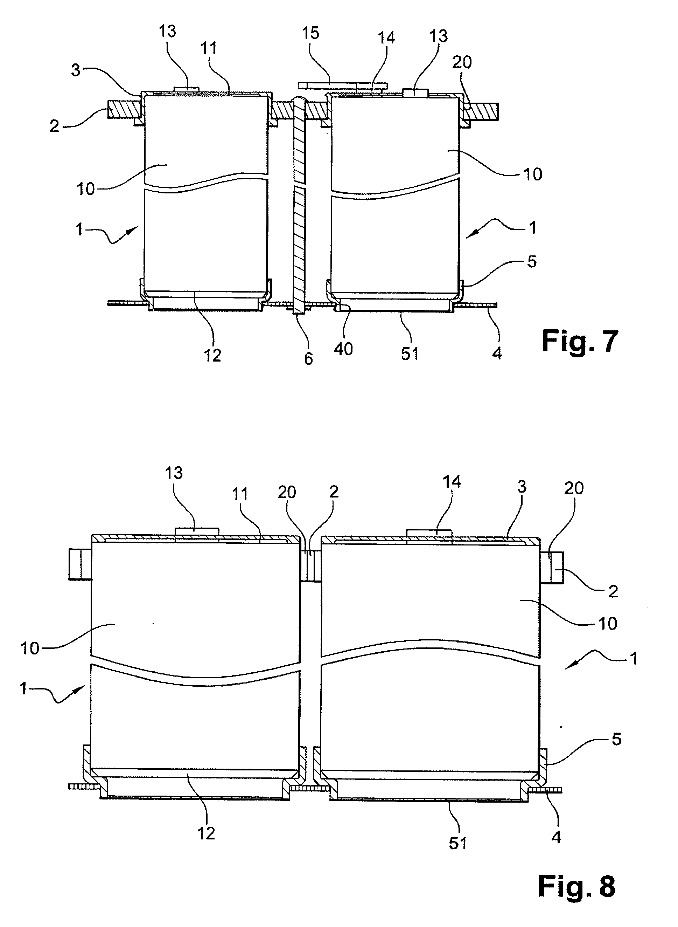

La figure 1 représente une vue en perspective d'un système de maintien monté avec des accumulateurs 1 électrochimiques. La figure 6 représente une vue de dessus d'un système de maintien monté avec des accumulateurs électrochimiques et les figures 7 et 8 représentent des vues en coupe du système de maintien de la figure 6 respectivement selon A-A et selon B-B.

Chaque accumulateur 1 électrochimique présente un conteneur 10 comprenant un couvercle 11 muni de bornes 13, 14 de sortie électrique et un fond 12 (figures 7 et 8). Les bornes 13, 14 de chaque accumulateur 1 sont connectées aux bornes d'accumulateurs adjacents ou à des bornes de puissance de la batterie au moyen d'une connexion électrique 15.

Le système de maintien comprend un premier flasque 2 muni d'ouvertures 20 traversantes.

Le système de maintien comprend également une pluralité de coupelles 3. Chaque coupelle 3 est adaptée à être placée sur le couvercle 3 d'un accumulateur 1 électrochimique. Chaque coupelle 3 est également adaptée à être reçue dans une des ouvertures 20 traversantes du premier flasque 2.

Comme expliqué plus haut, le système de maintien est ainsi modulaire et résistant mécaniquement.

Le système de maintien comprend en outre un deuxième flasque 4. Le deuxième flasque 4 est muni d'ouvertures 40 traversantes.

Le système de maintien comprend en outre une pluralité de bagues 5. Chaque bague 5 est adaptée à être placée sur le fond 12 d'un accumulateur 1 électrochimique. Chaque bague est également adaptée à être reçue dans une des ouvertures 40 traversantes du deuxième flasque 4.

L'ensemble du deuxième flasque et de la pluralité de bagues ajoute en modularité et en tenue mécanique du système de maintien.

Les accumulateurs 1 sont destinés à être disposés parallèlement les uns aux autres, comme représenté sur la figure 1. Les premier et deuxième flasques 2, 4 sont destinés à être disposés parallèlement l'un à l'autre, et perpendiculairement à la direction longitudinale des accumulateurs 1.

Le système de maintien comprend des moyens 6 de serrage des premier et deuxième flasques 2, 4, par exemple des tirants. Les moyens 6 de serrage permettent de rapprocher les premier et deuxième flasques 2, 4 l'un de l'autre en les maintenant parallèles l'un à l'autre puis de les serrer. Ainsi, une fois le système de maintien monté, les accumulateurs 1 ne peuvent plus bouger, ni selon la direction de leur axe longitudinal (maintien par moyen 6 de serrage), ni selon une direction transversale (maintien par les flasques).

La figure 2 représente une vue en perspective d'une coupelle d'un système de maintien d'accumulateurs électrochimiques. La figure 3 représente une vue en coupe de la coupelle de la figure 2 selon C-C.

Chaque coupelle 3 comprend un corps 30 sensiblement cylindrique fermé par un couvercle 31.

Chaque coupelle 3 peut, de façon optionnelle, comprendre des découpes 37 sur ses bords 30. Les découpes 37 peuvent être ménagées sur toute la hauteur des bords 30. Les découpes sont par exemple au nombre de quatre. Ainsi, le couvercle 31 de chaque coupelle 3 a une forme de cercle amputé de quatre arcs de cercle remplacés par des segments. Les segments sont sensiblement parallèles deux à deux. Ainsi, deux accumulateurs peuvent être placés plus près l'un de l'autre que si le couvercle de la coupelle était en forme de cercle complet. Cela est visible en particulier sur les figures 1 et 6. Les découpes 37 permettent ainsi d'augmenter la compacité de la batterie munie d'un système de maintien selon l'invention.

Comme représenté sur la figure 8, les accumulateurs ne se touchent pas au niveau de deux découpes 37 adjacentes. En effet, les conteneurs 10 des accumulateurs sont séparés par une partie de premier flasque. Cette partie de premier flasque comprise entre deux accumulateurs adjacents est maximisée du fait de l'absence de bords à la coupelle à cet endroit-là. Cela permet d'augmenter la rigidité du premier flasque 2.

Une fois le système de maintien monté avec des accumulateurs, la présence des découpes 37 sur une coupelle 3 permet d'assurer l'arrêt en rotation de la coupelle 3 par rapport au flasque 2.

Par ailleurs, la figure 2 montre aussi deux trous 33, 34 sur le couvercle 31 de chaque coupelle 3. Chacun des trous 33, 34 est adapté à permettre le passage d'une des bornes 13, 14 de sortie électrique de l'accumulateur 1 sur lequel la coupelle 3 est destinée à être placée. Une fois les coupelles placées sur les accumulateurs, la connexion électrique peut facilement être réalisée entre deux bornes de polarités opposées de deux accumulateurs adjacents.

Les trous 33, 34 peuvent être de tailles différentes, avec un marquage 38, 39 de polarité électrique à proximité de chacun des trous. Sur la figure 2, le plus petit trou 33 correspond à la borne négative et est associé au marquage « - » 38 et le plus gros trou 34 correspond à la borne positive et est associé au marquage « + » 39. De cette façon, chaque coupelle 3 ne peut être placée que d'une unique façon sur un accumulateur 1, ce qui permet de ne pas se tromper pour les connexions ultérieures à réaliser. En outre, les trous 33, 34 permettent d'assurer l'arrêt en rotation de l'accumulateur 1 dans la coupelle 3.

Chaque coupelle 3 peut en outre comprendre un ergot 36 de détrompage, situé sur le corps 30. Cet ergot 36 est adapté à pénétrer dans une rainure correspondante sur le premier flasque 2. La présence de cet ergot permet de placer d'une unique façon chaque coupelle 3 dans une ouverture 20 traversante du premier flasque. Cela permet de ne pas se tromper pour les connexions ultérieures à réaliser.

Une fois le système de maintien monté, la présence de l'ergot 36 sur une coupelle 3 permet également d'assurer l'arrêt en rotation de la coupelle 3 par rapport au premier flasque 2.

La figure 4 représente une vue en perspective d'une bague d'un système de maintien d'accumulateurs électrochimiques. La figure 5 représente une vue en coupe de la bague de la figure 4 selon D-D.

Chaque bague 5 comprend un corps 50 sensiblement cylindrique. Le corps 50 est de préférence fermé par un fond 51.

Le fond 51 de chaque bague 5 sert, une fois le système de maintien monté avec des accumulateurs, à protéger l'accumulateur sur lequel est placée la bague 5. Le fond 51 est de préférence muni d'un opercule sécable. Ainsi, dans le cas où un accumulateur monté dans une batterie en fonctionnement est soumis à de fortes pressions et présente un dispositif de sécurité pour évacuer la surpression par le fond, l'opercule sécable se détache, permettant de libérer la pression. Des gaz chauds et/ou de l'électrolyte peuvent alors s'échapper par le fond 51 désoperculé. Les fonds 51 non désoperculés des autres bagues permettent de protéger les autres accumulateurs des gaz chauds et/ou des projections d'électrolyte. Cela diminue le risque de contamination des accumulateurs en bon état par de l'électrolyte.

Ainsi, après montage du système de maintien avec des accumulateurs, un espace existe entre le fond 12 de l'accumulateur et le fond 51 de la bague 5. Cet espace peut recevoir le gaz libéré par l'accumulateur lorsque le dispositif de sécurité est activé. Si la pression reste limitée, l'opercule de la bague ne se déchirera pas. Le gaz et l'électrolyte ne se répandront pas.

Par ailleurs, chaque coupelle 3 peut comprendre des épaulements 32 servant de butée au premier flasque 2. Les épaulements 32 de chaque coupelle 3 sont situés sur le corps 30 à l'opposé du couvercle 31.

De même, chaque bague 5 peut comprendre des épaulements 52 servant de butée au deuxième flasque 4. Les épaulements 52 de chaque bague 5 sont situés entre le corps 50 et le fond 51.

Ainsi, après montage du système de maintien, le premier flasque 2 est pris en sandwich entre une extrémité des moyens 6 de serrage et les épaulements 32 de la pluralité de coupelles 3. De même, le deuxième flasque 4 est pris en sandwich entre une extrémité des moyens 6 de serrage et les épaulements 52 de la pluralité de bagues 5. Les épaulements 32, 52 des coupelles 3 et des bagues 5 participent à la bonne tenue mécanique du système de maintien une fois monté.

Les coupelles 3 et les bagues 5 sont par exemple en matériau isolant électriquement, par exemple en matériau plastique. Ainsi, une isolation électrique est créée par chaque coupelle 3 et chaque bague 5 entre les accumulateurs 1 et les premier et deuxième flasques 2, 4.

En particulier, les couvercles 31 des coupelles 3 et les fonds 51 des bagues 5 isolent les accumulateurs et augmentent les distances de lignes de fuite, en particulier pour les hautes tensions utilisées pour les batteries, par exemple jusqu'à 10 000V.

Le corps 30 de la coupelle 3 peut présenter une hauteur comprise entre 1 mm et la hauteur totale de l'accumulateur.

Le premier flasque 2 repose contre le corps 30 de chaque coupelle 3. Lorsque la coupelle 3 comporte des découpes 37, celles-ci doivent présenter une largeur limitée pour éviter que le premier flasque 2 puisse contacter électriquement les conteneurs 10 des accumulateurs 1, comme cela est représenté en particulier sur la figure 8.

Le deuxième flasque 4 repose contre le corps 50 de la bague 5.

Il est donc possible de réaliser les premier et deuxième flasques 2, 4 en matériau conducteur électriquement, par exemple en métal, puisqu'ils sont isolés des accumulateurs. Des flasques métalliques présentent l'avantage d'être peu coûteux à fabriquer. Ils présentent également l'avantage de pouvoir être fabriqués par simple usinage plutôt que par moulage, qui est un procédé de fabrication plus long et plus contraignant que l'usinage d'une tôle. Le coût et le temps de fabrication du système de maintien sont donc réduits. L'usinage des premier et deuxième flasques peut être réalisé par exemple par découpe par emboutissage, poinçonnage, matriçage, laser, jet d'eau, électroérosion, fraisage ou toute autre technique appropriée à l'usinage d'une tôle.

De plus, les fonctions d'isolation électrique des deux bornes et de maintien mécanique sont dissociées, ce qui permet d'utiliser des flasques en matériau conducteur électriquement, qui présenterait une meilleure tenue mécanique que les matériaux isolant électriquement.

En variante, les coupelles 3 et/ou les bagues 5 sont en matériau conducteur électriquement. Les premier et/ou deuxième flasques 2, 4 sont alors en matériau isolant électriquement afin de garantir l'isolation électrique entre deux accumulateurs adjacents.

Dans une autre variante, à la fois les coupelles 3, les bagues 5 et les premier et deuxième flasques 2, 4 sont en matériau isolant électriquement.

Les premier et deuxième flasques 2, 4 sont de préférence plans. Ainsi, ils sont faciles à fabriquer.

Des flasques plans et peu épais autorisent une déformation des flasques. Cela permet de maintenir le système de maintien monté sous charge afin d'améliorer la tenue aux vibrations sans que le fléchissement issu de la déformation induite par la charge n'interfère avec les connexions 15.

En outre, chaque coupelle 3 peut comprendre au moins un bossage 35 de retenue du premier flasque 2. Les bossages 35 de chaque coupelle 3 sont situés sur le corps, à proximité du couvercle 31 de la coupelle 3. De même, chaque bague 5 peut comprendre au moins un bossage 55 de retenue du deuxième flasque 4. Les bossages 55 de chaque bague 5 sont situés sur le corps, à proximité du fond 51 de la bague 5.

Ainsi, lorsque chaque coupelle 3 est reçue dans une ouverture 20 traversante du premier flasque 2, le premier flasque 2 est maintenu en position entre les épaulements 32 de la coupelle 3 et les bossages 35 de la coupelle. De même, lorsque chaque bague 5 est reçue dans une ouverture 40 traversante du deuxième flasque 4, le deuxième flasque 4 est maintenu en position entre les épaulements 52 de la bague 5 et les bossages 55 de la bague 5.

Cela permet un pré-montage en attendant la fixation par les moyens 6 de serrage. Cela permet également de prémonter la pluralité de coupelles 3 ou de bagues 5 dans la pluralité d'ouvertures 20, 40 traversantes du premier flasque 2 ou du deuxième flasque 4 respectivement afin de faciliter la manutention de flasques équipées de coupelles ou de bagues.

Dans le cas où le matériau de chaque coupelle 3 et de chaque bague 5 est légèrement élastique, cela permet d'enficher chaque coupelle 3/bague 5 dans une ouverture 20, 40 traversante du premier/deuxième flasque 2, 4 par déformation élastique avant que la coupelle 3/bague 5 soit placée sur le couvercle 11/fond 12 d'un accumulateur 1.

Les ouvertures 20, 40 traversantes des premier et deuxième flasques 2 ont une forme intérieure correspondant à la forme extérieure des coupelles, respectivement des bagues, en particulier au niveau des bords des coupelles, respectivement des bagues.

Le corps 30 de chaque coupelle 3 sert d'élément de guidage pour positionner correctement la coupelle 3 sur le couvercle 11 d'un accumulateur puis la coupelle 3 dans une ouverture 20 traversante du premier flasque. De même, le corps 50 de chaque bague 5 sert d'élément de guidage pour positionner correctement la bague 5 sur le fond 12 d'un accumulateur puis la bague 5 dans une ouverture 40 traversante du deuxième flasque.

Le système de maintien est modulaire. En effet, le même premier flasque 2 peut être utilisé avec des coupelles 3 ayant des tailles de trous 33, 34 variées ou des positionnements de trous 33, 34 variés. De même, pour des diamètres d'accumulateurs légèrement différents, les mêmes premier et deuxième flasques 2, 4 peuvent être utilisés, avec des coupelles 3 et des bagues 5 de même forme extérieure mais d'épaisseurs variées, à la condition que l'épaisseur soit suffisante pour assurer l'isolation électrique décrite plus haut.

Le système de maintien peut donc assurer une multitude de fonctions en plus de la fixation mécanique des accumulateurs :
- l'isolation électrique des accumulateurs,
- le détrompage des accumulateurs, assuré par les trous 33, 34 de tailles différentes des coupelles 3, avec le marquage 38, 39 associé, ainsi que par l'ergot 36 de chaque coupelle 3,
- le pré-montage des accumulateurs, assuré par les bossages 35 et les épaulements 32 de chaque coupelle 3 et les bossages 55 et les épaulements 52 de chaque bague 5,
- la protection et l'étanchéité des accumulateurs aux projections de gaz chaud et/ou d'électrolyte, assurée par le fond 51 de chaque bague 5.

Le système de maintien permet également de gagner en temps de développement du fait de sa modularité.

L'invention concerne également une batterie comprenant une pluralité d'accumulateurs et un système de maintien tel que décrit ci-dessus.

## Revendications

1. Système de maintien d'accumulateurs électrochimiques, chaque accumulateur (1) présentant un conteneur comprenant un fond (12) et un couvercle (11) muni de bornes (13, 14) de sortie électrique, le système comprenant :
- un premier flasque (2) muni d'ouvertures (20) traversantes ;
- une pluralité de coupelles (3), chaque coupelle (3) étant adaptée pour être placée sur le couvercle (11) d'un accumulateur (1) électrochimique et pour être reçue dans une des ouvertures (20) traversantes du premier flasque (2), chaque coupelle (3) étant en matériau isolant électriquement.

2. Système de maintien d'accumulateurs électrochimiques selon la revendication 1, dans lequel chaque premier flasque (2) est en matériau conducteur électriquement.

3. Système de maintien d'accumulateurs électrochimiques selon la revendication 1, dans lequel chaque premier flasque (2) est en matériau isolant électriquement.

4. Système de maintien d'accumulateurs électrochimiques selon l'une des revendications 1 à 3, dans lequel chaque coupelle (3) comprend un épaulement (32) servant de butée au premier flasque (2).

5. Système de maintien d'accumulateurs électrochimiques selon la revendication 4, dans lequel chaque coupelle (3) comprend un moins un bossage (35) de retenue du premier flasque (2).

6. Système de maintien d'accumulateurs électrochimiques selon l'une des revendications 1 à 5, dans lequel chaque coupelle (3) comprend des découpes (37) sur ses bords.

7. Système de maintien d'accumulateurs électrochimiques selon l'une des revendications 1 à 6, dans lequel chaque coupelle (3) comprend deux trous (33, 34) de tailles différentes et un marquage (38, 39) de polarité électrique, chacun des trous (33, 34) permettant le passage d'une des bornes (13, 14) de sortie électrique d'un accumulateur (1).

8. Système de maintien d'accumulateurs électrochimiques selon la revendication 7, dans lequel chaque coupelle (3) comprend en outre un ergot (36) de détrompage.

9. Système de maintien d'accumulateurs électrochimiques selon l'une des revendications 1 à 8, comprenant en outre :
- un deuxième flasque (4) muni d'ouvertures (40) traversantes ;
- une pluralité de bagues (5), chaque bague (5) étant adaptée à être placée sur le fond (12) d'un accumulateur (1) électrochimique et à être reçue dans une des ouvertures (40) traversantes du deuxième flasque (4).

10. Système de maintien d'accumulateurs électrochimiques selon la revendication 9, dans lequel chaque bague (5) est en matériau isolant électriquement.

11. Système de maintien d'accumulateurs électrochimiques selon la revendication 9 ou 10, dans lequel chaque deuxième flasque (4) est en matériau conducteur électriquement.

12. Système de maintien d'accumulateurs électrochimiques selon la revendication 9, dans lequel chaque bague (5) est en matériau conducteur électriquement.

13. Système de maintien d'accumulateurs électrochimiques selon la revendication 9, 10 ou 12, dans lequel chaque deuxième flasque (4) est en matériau isolant électriquement.

14. Système de maintien d'accumulateurs électrochimiques selon l'une des revendications 9 à 13, dans lequel chaque bague (5) est munie d'un fond (51) comprenant un opercule sécable.

15. Système de maintien d'accumulateurs électrochimiques selon l'une des revendications 9 à 14, dans lequel chaque bague (5) comprend un épaulement (52) servant de butée au deuxième flasque (4).

16. Système de maintien d'accumulateurs électrochimiques selon l'une des revendications 9 à 15, dans lequel chaque bague (5) comprend un moins un bossage (55) de retenue du deuxième flasque (4).

17. Batterie comprenant :
- une pluralité d'accumulateurs (1) électrochimiques,
- un système de maintien selon l'une des revendications 1 à 16.

## Patentansprüche

1. Halterungssystem für elektrochemische Akkumulatoren, wobei jeder Akkumulator (1) einen Behälter aufweist, der einen Boden (12) und einen mit elektrischen Ausgangsklemmen (13, 14) ausgestatteten Deckel (11) umfasst, wobei das System umfasst:
- eine erste Scheibe (2), die mit durchgehenden Öffnungen (20) ausgestattet ist;
- mehrere Kappen (3), wobei jede Kappe (3) dafür eingerichtet ist, auf dem Deckel (11) eines elektrochemischen Akkumulators (1) angeordnet zu werden und in einer der durchgehenden Öffnungen (20) der ersten Scheibe (2) aufgenommen zu werden, wobei jede Kappe (3) aus elektrisch isolierendem Material besteht.

2. Halterungssystem für elektrochemische Akkumulatoren nach Anspruch 1, wobei jede erste Scheibe (2) aus elektrisch leitendem Material besteht.

3. Halterungssystem für elektrochemische Akkumulatoren nach Anspruch 1, wobei jede erste Scheibe (2) aus elektrisch isolierendem Material besteht.

4. Halterungssystem für elektrochemische Akkumulatoren nach einem der Ansprüche 1 bis 3, wobei jede Kappe (3) einen Ansatz (32) umfasst, der als Anschlag für die erste Scheibe (2) dient.

5. Halterungssystem für elektrochemische Akkumulatoren nach Anspruch 4, wobei jede Kappe (3) mindestens eine Erhebung (35) zum Festhalten der ersten Scheibe (2) umfasst.

6. Halterungssystem für elektrochemische Akkumulatoren nach einem der Ansprüche 1 bis 5, wobei jede Kappe (3) Ausschnitte (37) an ihren Rändern umfasst.

7. Halterungssystem für elektrochemische Akkumulatoren nach einem der Ansprüche 1 bis 6, wobei jede Kappe (3) zwei Löcher (33, 34) von unterschiedlicher Größe und eine Markierung (38, 39) der elektrischen Polarität umfasst, wobei jedes der Löcher (33, 34) das Hindurchführen einer der elektrischen Ausgangsklemmen (13, 14) eines Akkumulators (1) ermöglicht.

8. Halterungssystem für elektrochemische Akkumulatoren nach Anspruch 7, wobei jede Kappe (3) außerdem einen Unverwechselbarkeitszahn (36) umfasst.

9. Halterungssystem für elektrochemische Akkumulatoren nach einem der Ansprüche 1 bis 8, welches außerdem umfasst:
- eine zweite Scheibe (4), die mit durchgehenden Öffnungen (40) ausgestattet ist;
- mehrere Ringe (5), wobei jeder Ring (5) dafür eingerichtet ist, auf dem Boden (12) eines elektrochemischen Akkumulators (1) angeordnet zu werden und in einer der durchgehenden Öffnungen (40) der zweiten Scheibe (4) aufgenommen zu werden.

10. Halterungssystem für elektrochemische Akkumulatoren nach Anspruch 9, wobei jeder Ring (5) aus elektrisch isolierendem Material besteht.

11. Halterungssystem für elektrochemische Akkumulatoren nach Anspruch 9 oder 10, wobei jede zweite Scheibe (4) aus elektrisch leitendem Material besteht.

12. Halterungssystem für elektrochemische Akkumulatoren nach Anspruch 9, wobei jeder Ring (5) aus elektrisch leitendem Material besteht.

13. Halterungssystem für elektrochemische Akkumulatoren nach Anspruch 9, 10 oder 12, wobei jede zweite Scheibe (4) aus elektrisch isolierendem Material besteht.

14. Halterungssystem für elektrochemische Akkumulatoren nach einem der Ansprüche 9 bis 13, wobei jeder Ring (5) mit einem Boden (51) ausgestattet ist, der einen teilbaren Verschluss umfasst.

15. Halterungssystem für elektrochemische Akkumulatoren nach einem der Ansprüche 9 bis 14, wobei jeder Ring (5) einen Ansatz (52) umfasst, der als Anschlag für die zweite Scheibe (4) dient.

16. Halterungssystem für elektrochemische Akkumulatoren nach einem der Ansprüche 9 bis 15, wobei jeder Ring (5) mindestens eine Erhebung (55) zum Festhalten der zweiten Scheibe (4) umfasst.

17. Batterie, welche umfasst:
- mehrere elektrochemische Akkumulatoren (1),
- ein Halterungssystem nach einem der Ansprüche 1 bis 16.

## Claims

1. An electrochemical storage cell retention system, each storage cell (1) having a container comprising a bottom portion (12), and a top portion (11) provided with electrical output terminals (13, 14), the system comprising:
- a first tray member (2) provided with through openings (20);
- a plurality of adapter cups (3), each adapter cup (3) being designed to be placed on the top portion (11) of a storage cell (1) and to be received in one of the through openings (20) of the first tray member (2), each adapter cup (3) being of an electrically insulating material.

2. The storage cell retention system according to claim 1, in which each first tray member (2) is of an electrically conducting material.

3. The storage cell retention system according to claim 1, in which each first tray member (2) is of an electrically insulating material.

4. The storage cell retention system according to one of claims 1 to 3, in which each adapter cup (3) includes a shoulder portion (32) acting as an abutment at the first tray member (2).

5. The storage cell retention system according to claim 4, in which each adapter cup (3) includes at least one boss portion (35) for retaining the first tray member (2).

6. The storage cell retention system according to one of claims 1 to 5, in which each adapter cup (3) includes cut-out portions (37) at its sides.

7. The storage cell retention system according to one of claims 1 to 6, in which each adapter cup (3) includes two holes (33, 34) of differing sizes and a marking (38, 39) for electrical polarity, each one of the holes (33, 34) allowing the passage of one of the electrical output terminals (13, 14) of a storage cell (1).

8. The storage cell retention system according to claim 7, in which each adapter cup (3) further includes a locating lug (36).

9. The storage cell retention system according to one of claims 1 to 8, further comprising:
- a second tray member (4) provided with through openings (40);
- a plurality of rings (5), each ring (5) being adapted to be placed on the bottom portion (12) of the storage cell (1) and to be received in one of the through openings (40) of the second tray member (4).

10. The storage cell retention system according to claim 9, in which each ring (5) is of an electrically insulating material.

11. The storage cell retention system according to claim 9 or 10, in which each second tray member (4) is of an electrically conducting material.

12. The storage cell retention system according to claim 9, in which each ring (5) is of an electrically conducting material.

13. The storage cell retention system according to claim 9, 10 or 12, in which each second tray member (4) is of an electrically insulating material.

14. The storage cell retention system according to one of claims 9 to 13, in which each ring (5) is provided with a base (51) including a frangible disc.

15. The storage cell retention system according to one of claims 9 to 14, in which each ring (5) includes a shoulder portion (52) acting as an abutment at the second tray member (4).

16. The storage cell retention system according to one of claims 9 to 15, in which each ring (5) includes a least one boss portion (55) for retention of the second tray member (4).

17. A battery comprising:
- a plurality of electrochemical storage cells (1),
- a retention system according to one of claims 1 to 16.
